# EUROPEAN PATENT APPLICATION

(11) **EP 4 645 897 A1**
(43) Date of publication of application: **05.11.2025**
(21) Application number: 23911396.2
(22) Date of filing: 07.11.2023
(51) Int. Cl.: H04R 1/00, H04R 1/02, H04R 3/04, H04R 17/00

(54) **BONE CONDUCTION ACOUSTIC MODULE AND ACOUSTIC SYSTEM**

(30) Priority: 28.12.2022 JP 2022212386; 28.12.2022 JP 2022212390
(71) Applicant: TDK Corporation, Tokyo 103-6128 (JP)
(72) Inventor: ONOMATSU Takehiro, Tokyo 103-6128 (JP); KITANO Satoshi, Tokyo 103-6128 (JP); KITAGAWA Norimasa, Osaka-shi, Osaka 542-0081 (JP); FUJITANI Takeshi, Osaka-shi, Osaka 542-0081 (JP)
(74) Representative: Epping - Hermann - Fischer
(86) International application number: PCT/JP2023/040126
(87) International publication number: WO 2024/142612

(57) **Abstract**

A bone conduction acoustic module includes a piezoelectric element, a bone conduction member configured to abut the piezoelectric element and transmit vibrations of the piezoelectric element to a bone, and a support member configured to directly or indirectly support the piezoelectric element and the bone conduction member. The piezoelectric element includes a first flat surface abutting the bone conduction member and a second flat surface located on an opposite side of the first flat surface. The support member includes a first vacant portion where the support member is vacant on a first flat surface side and a second vacant portion where the support member is vacant on a second flat surface side.

## Description

### TECHNICAL FIELD

The present disclosure relates to a bone conduction acoustic module and an acoustic system.

Priority is claimed on Japanese Patent Application Nos. 2022-212386 and 2022-212390, filed December 28, 2022, the content of which is incorporated herein by reference.

### BACKGROUND ART

Conventionally, acoustic sound leakage from headphone devices to the outside has become a problem. For example, Patent Document 1 discloses a headset that includes a piezoelectric element configured to generate vibrations, a bone conduction member coupled to the piezoelectric element, a housing in which the piezoelectric element is mounted, and a connection member having low acoustic impedance for connecting the bone conduction member to the housing.

### CITATION LIST

### PATENT DOCUMENT

Patent Document 1: Japanese Unexamined Patent Application, First Publication No. 2017-5547

### SUMMARY OF INVENTION

### TECHNICAL PROBLEM

However, countermeasures against sound leakage may not be sufficient in conventional techniques and there has been a problem such as difficulty in using headsets used at high volumes and the like in public places.

The present disclosure has been made in consideration of the above circumstances and an objective of the present disclosure is to provide a bone conduction acoustic module and an acoustic system capable of suppressing acoustic sound leakage.

### Solution to Problem

According to an aspect of the present disclosure, there is provided a bone conduction acoustic module including: a piezoelectric element; a bone conduction member configured to abut the piezoelectric element and transmit vibrations of the piezoelectric element to a bone; and a support member configured to directly or indirectly support the piezoelectric element and the bone conduction member, wherein the piezoelectric element includes a first flat surface abutting the bone conduction member and a second flat surface located on an opposite side of the first flat surface, and wherein the support member includes a first vacant portion where the support member is vacant on a first flat surface side and a second vacant portion where the support member is vacant on a second flat surface side.

According to an aspect of the present disclosure, there is provided a head-mounted acoustic system including a display unit and a frame, the acoustic system including: the above-described bone conduction acoustic module, wherein the bone conduction member is fixed to the frame at a position where the vibrations of the piezoelectric element are transmitted to a mastoid projection.

### Advantageous Effects of Invention

According to the bone conduction acoustic module and acoustic system of the present disclosure, acoustic sound leakage can be suppressed.

### BRIEF DESCRIPTION OF DRAWINGS

[FIG. 1] A perspective view showing an example of a bone conduction acoustic module according to an embodiment.
[FIG. 2] A perspective view showing the example of the bone conduction acoustic module according to the embodiment.
[FIG. 3] A perspective view showing an example of a piezoelectric element and a holding member according to the embodiment.
[FIG. 4] A partial cross-sectional perspective view showing a cross-section along line IV-IV in FIG. 1.
[FIG. 5] A side view showing an example of a head-mounted state of an acoustic system according to the embodiment.
[FIG. 6] A block diagram showing an example of output adjustment.
[FIG. 7] A graph showing an example of a measurement result of sound leakage in a side direction.
[FIG. 8] A graph showing an example of a measurement result of sound leakage in a top direction.
[FIG. 9] A graph showing a first example of characteristics of an equalizer
[FIG. 10] A graph showing a second example of the characteristics of the equalizer.

### DESCRIPTION OF EMBODIMENTS

Hereinafter, embodiments of the present disclosure will be described with reference to the drawings.

### [Bone conduction acoustic module]

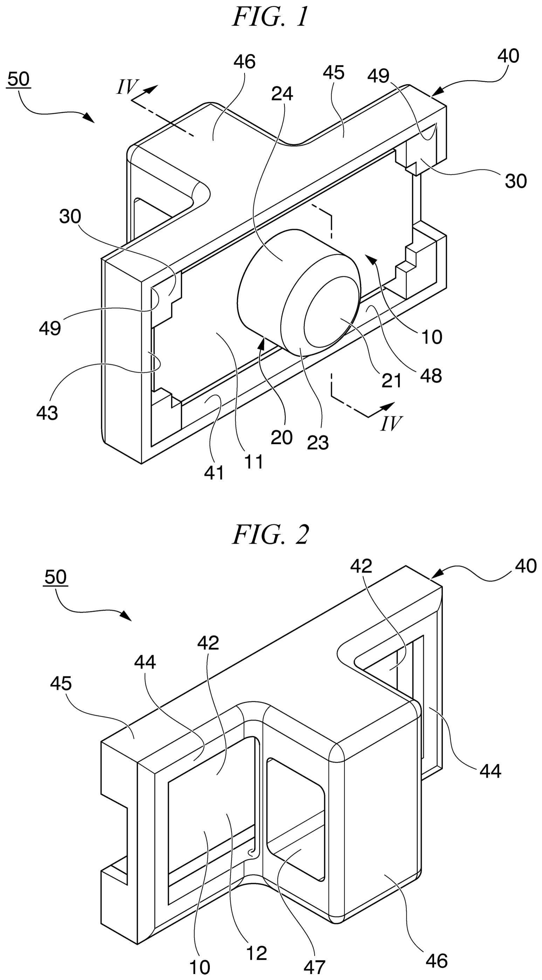

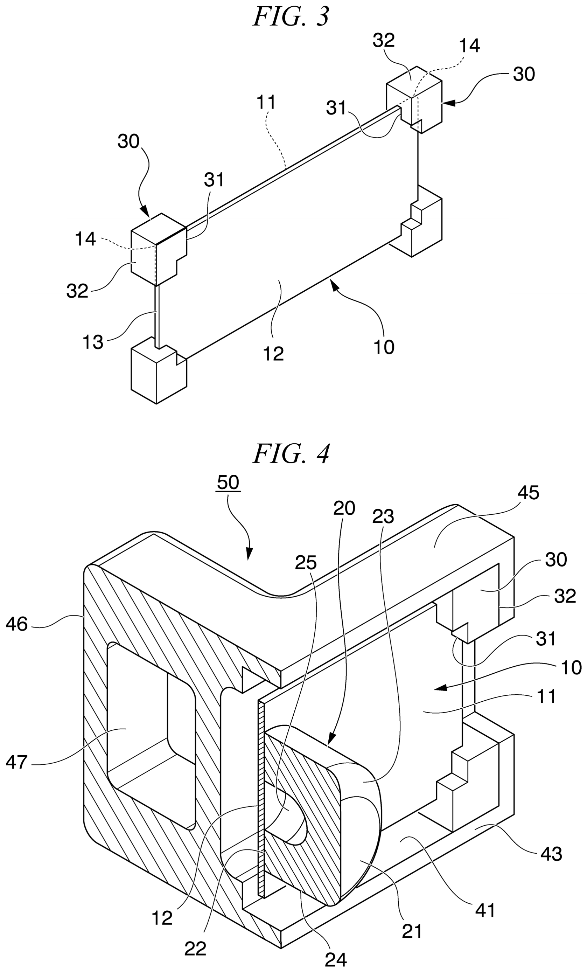

FIGS. 1 and 2 are perspective views showing an example of a bone conduction acoustic module according to an embodiment. FIG. 3 is a perspective view showing an example of a piezoelectric element and a holding member according to the embodiment. FIG. 4 is a partial cross-sectional perspective view showing a cross-section along line IV-IV in FIG. 1.

As shown in FIG. 1, a bone conduction acoustic module 50 includes a housing 40, a piezoelectric element 10, and a bone conduction member 20 configured to transmit vibrations of the piezoelectric element 10 to bones.

The piezoelectric element 10 in the example shown in the drawing is provided in a housing 40. The housing 40 is a support member configured to directly or indirectly support the piezoelectric element 10 and the bone conduction member 20.

As shown in FIG. 4, the bone conduction member 20 abuts the piezoelectric element 10. The piezoelectric element 10 includes a first flat surface **11** abutting the bone conduction member 20 and a second flat surface 12 located on an opposite side of the first flat surface 11.

The bone conduction member 20 has a first flat surface 21 arranged facing a bone (not shown) and a second flat surface 22 abutting the piezoelectric element 10. The second flat surface 22 of the bone conduction member 20 abuts the first flat surface **11 of** the piezoelectric element 10.

As shown in FIG. **1****,** the housing 40 of the bone conduction acoustic module 50 includes a holding member 30 configured to hold the piezoelectric element 10.

The piezoelectric element 10 in the example shown in the drawing has a rectangular shape. In the housing 40, a space 48 in which the piezoelectric element 10 is provided has also a rectangular shape. The bone conduction member 20 abuts a center portion of the piezoelectric element 10. The piezoelectric element 10 is held by the holding member 30 so that contact with the housing 40 is prevented. The transmission of vibrations from the piezoelectric element 10 to the housing 40 is reduced. Thereby, acoustic sound leakage can be suppressed.

As shown in FIGS. 3 and 4, the holding member 30 holds the piezoelectric element 10 at a piezoelectric element holding portion 31 and is fixed to the housing 40 at a housing fixing portion 32. The piezoelectric element holding portion 31 and the housing fixing portion 32 are spaced apart from each other, such that a gap between the piezoelectric element 10 and the housing 40 is ensured.

The holding member 30 holds an outer circumference 13 of the piezoelectric element 10. One or more holding members 30 may be provided. Because the outer circumference 13 of the piezoelectric element 10, which is relatively small, is held by the holding member 30, the transmission of vibrations from the piezoelectric element 10 to the housing 40 is further reduced.

**In** the example shown in the drawing, a plurality of holding members 30 are provided at corners 49 of a rectangular space 48 in the housing 40. Moreover, the plurality of holding members 30 are also provided at corners 14 of the rectangular piezoelectric element 10. When the corner 14 where the amplitude of the piezoelectric element 10 is the lowest is sandwiched between the holding members 30, the transmission of vibrations from the piezoelectric element 10 to the housing 40 is further reduced.

The housing 40, which is an example of a support member, includes a first vacant portion 41 that is vacant on the first flat surface 11 side of the piezoelectric element 10 as shown in FIG. 1 and includes a second vacant portion 42 that is vacant on the second flat surface 12 side of the piezoelectric element 10 as shown in FIG. 2.

The first vacant portion 41 is surrounded by a first frame portion 43 that is made up of a part of the housing 40.

The second vacant portion 42 is surrounded by a second frame portion 44 that is made up of a part of the housing 40.

The first frame portion 43 and the second frame portion 44 are formed on a side wall portion 45 of the housing 40 that surrounds the outer circumference 13 of the piezoelectric element 10.

When the first vacant portion 41 is vacant, vibrations are generated in the air on the first flat surface **11** side of the piezoelectric element 10. Moreover, when the second vacant portion 42 is vacant, vibrations are generated in the air on the second flat surface 12 side of the piezoelectric element 10. The vibrations generated on the first flat surface 11 side are in antiphase to the vibrations generated on the second flat surface 12 side and the vibrations generated on the second flat surface 12 side are cancelled out. Thereby, acoustic sound leakage can be suppressed.

The piezoelectric element 10 is held in the housing 40 having the first vacant portion 41 and the second vacant portion 42 so that contact with the housing 40 is prevented. Because the vibrations of the piezoelectric element 10 are not easily transmitted to the housing 40, they are instead easily transmitted to the air around the piezoelectric element 10 within the housing 40, except for the portion of vibrations that are transmitted to the bone via the bone conduction member 20. Because the housing 40 is vacant on both sides of the piezoelectric element 10, a canceling effect due to opposite phases occurs and acoustic sound leakage can be suppressed.

The bone conduction member 20 is an elastically deformable member. Examples of a material of the bone conduction member 20 include synthetic resin, elastomer, hard rubber, and the like.

The holding member 30 is an elastically deformable member. Examples of a material of the holding member 30 include elastomer, rubber, and the like. More specifically, examples of the material include silicone rubber, chloroprene rubber, urethane rubber, butadiene rubber, elastomer, and the like.

The holding member 30 preferably has a lower hardness than the bone conduction member 20. The hardness is, for example, JIS-A hardness, which is referred to as "Type A durometer hardness" in JIS K 6253 (a method for determining the hardness of vulcanized and thermoplastic rubber). The hardness of the bone conduction member 20 is preferably 60° to 80°, and the hardness of the holding member 30 is preferably 30° to 50°.

Vibrations are transmitted from the bone conduction member 20 to the bone in accordance with an area surrounded by the outer circumference of the first flat surface 21 of the bone conduction member 20. Moreover, vibrations are transmitted from the piezoelectric element 10 to the bone conduction member 20 in accordance with an area surrounded by the outer circumference of the second flat surface 22 of the bone conduction member 20. Here, the area surrounded by the outer circumference of the first flat surface 21 or the second flat surface 22 is an area surrounded by a line where the first flat surface 21 or the second flat surface 22 is in contact with the outer circumference 24 of the bone conduction member 20.

Because the area surrounded by the outer circumference of the second flat surface 22 is larger than the area surrounded by the outer circumference of the first flat surface 21, the vibrations generated in the piezoelectric element 10 can be transmitted to the bone conduction member 20 faithfully without loss. Because the area surrounded by the outer circumference of the first flat surface 21 is smaller than the area surrounded by the outer circumference of the second flat surface 22, the vibrations transmitted to the bone conduction member 20 are efficiently transmitted to the bone.

The bone conduction member 20 has a tapered portion 23 in which a cross-sectional area surrounded by an outer circumference 24 of the bone conduction member 20 is reduced in a tapered shape from a side closer to the second flat surface 22 toward a side closer to the first flat surface 21. Thereby, the vibrations transmitted to the bone conduction member 20 are efficiently transmitted to the bone.

The tapered portion 23 in the example shown in the drawing is arranged at a position in contact with the first flat surface 21. In the example shown in the drawing, the tapered portion 23 of the bone conduction member 20 has a truncated cone shape and the remaining portion has a cylindrical shape. Although not particularly shown in the drawing, the entire outer circumference 24 of the bone conduction member 20 from the second flat surface 22 to the first flat surface 21 may be the tapered portion 23.

Although not particularly shown in the drawing, the entire bone conduction member 20 may be in the shape of a straight column, such as a cylindrical column. The area of the first flat surface 21 may be the same as the area of the second flat surface 22. Moreover, although not particularly shown in the drawing, a tip of the bone conduction member 20 rounded in a fillet shape or an R (round) shape may be provided. For example, the tapered portion 23 may be C-chamfered, R-chamfered, lightly chamfered, or the like.

When the shape of the bone conduction member 20 is a truncated cone shape, a cylindrical shape, or a combination thereof, a diameter of the first flat surface 21 is preferably equivalent to a diameter of the second flat surface 22 or less than or equal to the diameter of the second flat surface 22. Preferably, the outer diameter of the bone conduction member 20 monotonically decreases from the side closer to the second flat surface 22 toward the side closer to the first flat surface 21, and this also includes a case where there is a segment in which the outer diameter of the bone conduction member 20 is uniform (monotonic decrease in a broad sense).

When the piezoelectric element 10 has a rectangular shape, the diameter of the second flat surface 22 of the bone conduction member 20 is preferably less than or equal to a length of a short side of the piezoelectric element 10. When the piezoelectric element 10 has a circular shape, the area of the second flat surface 22 of the bone conduction member 20 is preferably larger than or equal to 1/4 and smaller than or equal to 1/2 of the area of the piezoelectric element 10.

As shown in FIG. 4, the bone conduction member 20 has an internal space 25. The material may be substantial so that the bone conduction member 20 does not have the internal space 25, but the mass of the material can be reduced when the bone conduction member 20 has the internal space 25.

As shown in FIGS. 2 and 4, the housing 40 in the example shown in the drawing has a mounting portion 46 on the second flat surface 12 side of the piezoelectric element 10. A mounting hole 47 is formed in the mounting portion 46. The mounting portion 46 can be used to mount the bone conduction acoustic module 50 on various types of acoustic systems.

In the example shown in the drawing, the first vacant portion 41 is vacant over substantially the entire surface surrounded by the side wall portion 45 of the housing 40. The second vacant portion 42 is vacant on both sides of the mounting portion 46. The shapes and numbers of the first vacant portion 41 and the second vacant portion 42 and the like can be designed as appropriate.

The areas of the first vacant portion 41 and the second vacant portion 42 can be set appropriately with respect to the area of the piezoelectric element 10. When the first vacant portion 41 or the second vacant portion 42 is formed in two or more locations, the areas are also the sum of the two or more locations. The area of the first vacant portion 41 may be 50% or more or 70% or more of the area of the piezoelectric element 10. The area of the second vacant portion 42 may be 50% or more or 70% or more of the area of the piezoelectric element 10.

Although the area of the first vacant portion 41 and the area of the second vacant portion 42 are preferably approximately the same, the area of the second vacant portion 42 may be larger than the area of the first vacant portion 41 or the area of the first vacant portion 41 may be larger than the area of the second vacant portion 42. Preferably, a difference between the area of the first vacant portion 41 and the area of the second vacant portion 42 is within about 30% of the area of the piezoelectric element 10.

### [Acoustic system]

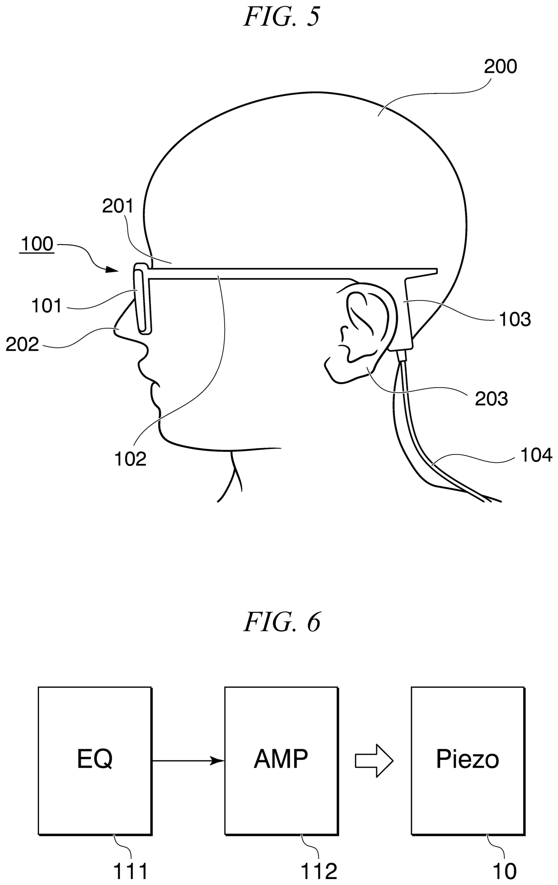

FIG. 5 is a side view showing an example of a state in which the acoustic system 100 according to the embodiment is mounted on a head 200.

The acoustic system 100 according to the embodiment is a head-mounted type, and includes a display unit 101 and a frame 102. The display unit 101 is arranged facing the eyes 201. For example, the acoustic system 100 may be a glasses type, a sunglasses type, or a goggle type. **In** the example shown in the drawing, the display unit 101 is supported by the nose 202 at a position for the eyes 201. Although not particularly shown in the drawing, the display unit 101 may be supported from the top or forehead side of the head 200.

The display unit 101 can display text information, image information, and the like toward the eyes 201. The acoustic system 100 may be applied to augmented reality (AR) or virtual reality (VR).

The display unit 101 may have a function of transmitting only light emitted from the display unit 101 to the eye 201. The display unit 101 may have a function of transmitting at least a part of light received from a visual field in front of the display unit 101 to the eye 201. Characters, images, and the like displayed by the display unit 101 may be displayed so that they are superimposed on the visual field in front of the display unit 101.

The frames 102 are arranged on both the left and right sides of the display unit 101. The left and right frames 102 are supported by ears 203. At least one of the left and right frames 102 has a conduction unit 103 including the bone conduction acoustic module 50 described above.

The bone conduction member 20 is fixed at a position where the vibrations of the piezoelectric element 10 are transmitted to a mastoid projection. The mastoid projection is a projection formed by a part of the skull projecting downward behind the ear 203. A bone conduction target is not particularly limited as long as it is a bone of the head 200. From the viewpoints of weight reduction of the acoustic system 100, wearing comfort, and the like, it is preferable to place the bone conduction acoustic module 50 behind the ear 203.

The acoustic system 100 may be able to perform transmission or reception to or from outside or may be able to communicate with the outside. The communication of the acoustic system 100 may be wireless or wired. The acoustic system 100 may have an internal power source such as a storage battery, or may be powered from an external power source. The acoustic system 100 in the example shown in the drawing has a cord 104, but may be cordless.

The acoustic system 100 may adjust an output of a sound input as an electrical signal to the piezoelectric element 10 in accordance with a frequency. Examples of an adjustment means include an equalizer, a filter, an effector, and the like. For example, as shown in FIG. 6, an amplifier (AMP) 112 that inputs the sound to the piezoelectric element 10 may be combined with an equalizer (EQ) 111.

When the piezoelectric element 10 has a higher impedance at low frequencies than at high frequencies, the amplifier may be driven at low frequencies. The electrical signal may be a voltage signal or an electric current signal. Although the electric current signal is less susceptible to noise, the voltage signal can be used to suppress sound leakage to the surroundings while implementing sufficient bone conduction even if the bone conduction acoustic module 50 of a small size is used.

As a specific example, the equalizer (EQ) **111** configured so that the attenuation of the sound input as an electrical signal to the piezoelectric element 10 is -24 dB or less at a frequency of 10 kHz or more on the high-frequency side may be provided.

Moreover, the equalizer (EQ) **111** configured so that the attenuation of (at least a part of) the sound input as an electrical signal to the piezoelectric element 10 is -6 dB or more within a frequency range of 2 kHz to 8 kHz may be provided.

**In** the bone conduction acoustic module 50 according to the present embodiment, because the housing 40 is vacant on both sides of the piezoelectric element 10, a canceling effect occurs due to the opposite phases and acoustic sound leakage can be suppressed.

Although an example in which the support member is the housing 40 is shown in examples of FIGS. 1 to 4, it is only necessary for the support member to have a shape including the first vacant portion 41 and the second vacant portion 42 on both sides of the piezoelectric element 10. The support member may be in the shape of a frame having at least a side wall portion 45 or may also be in the shape of a cage having an vacant portion in the side wall portion 45.

In the bone conduction acoustic module 50 of the present embodiment, because the piezoelectric element 10 is held by the holding member 30 so that contact with the housing 40 is prevented, the transmission of vibrations from the piezoelectric element 10 to the housing 40 can be reduced and acoustic sound leakage can be suppressed.

### [Appendixes]

Configuration Examples 1 to 16 are shown.

### (Configuration Example 1)

A bone conduction acoustic module including:
a piezoelectric element;
a bone conduction member configured to abut the piezoelectric element and transmit vibrations of the piezoelectric element to a bone; and
a support member configured to directly or indirectly support the piezoelectric element and the bone conduction member,
wherein the piezoelectric element includes a first flat surface abutting the bone conduction member and a second flat surface located on an opposite side of the first flat surface, and
wherein the support member includes a first vacant portion where the support member is vacant on a first flat surface side and a second vacant portion where the support member is vacant on a second flat surface side.

In addition, in the examples of FIGS. 1 to 4, the piezoelectric element 10 is an example of the piezoelectric element, the bone conduction member 20 is an example of the bone conduction member, and the housing 40 is an example of the support member.

### (Configuration Example 2)

The bone conduction acoustic module according to Configuration Example 1,
wherein the support member is a housing including a holding member, and
wherein the piezoelectric element is provided within the housing so that contact with the housing is prevented by the holding member.

In the examples of FIGS. 1 to 4, the holding member 30 is an example of the holding member and the housing 40 is an example of the support member.

### (Configuration Example 3)

The bone conduction acoustic module according to Configuration Example 2,
wherein the holding member and the bone conduction member are both elastically deformable members, and
wherein the holding member has a lower hardness than the bone conduction member.

### (Configuration Example 4)

The bone conduction acoustic module according to any one of Configuration Examples 1 to 3,
wherein the bone conduction member has a first flat surface arranged facing the bone and a second flat surface abutting the piezoelectric element, and
wherein an area surrounded by an outer circumference of the second flat surface of the bone conduction member is larger than an area surrounded by an outer circumference of the first flat surface of the bone conduction member.

### (Configuration Example 5)

The bone conduction acoustic module according to Configuration Example 4, wherein the bone conduction member has a tapered portion in which a cross-sectional area surrounded by an outer circumference of the bone conduction member is reduced in a tapered shape from a side closer to the second flat surface of the bone conduction member toward a side closer to the first flat surface of the bone conduction member.

### (Configuration Example 6)

The bone conduction acoustic module according to any one of any one of Configuration Examples 1 to 5, wherein the bone conduction member has an internal space.

### (Configuration Example 7)

A head-mounted acoustic system including a display unit and a frame, the acoustic system including:
the bone conduction acoustic module according to any one of Configuration Examples 1 to 6,
wherein the bone conduction member is fixed to the frame at a position where the vibrations of the piezoelectric element are transmitted to a mastoid projection.

In addition, in the example of FIG. 5, the acoustic system 100 is an example of the acoustic system, the display unit 101 is an example of the display unit, and the frame 102 is an example of the frame.

### (Configuration Example 8)

A bone conduction acoustic module including:
a housing;
a piezoelectric element provided within the housing;
a bone conduction member configured to abut the piezoelectric element and transmit vibrations of the piezoelectric element to a bone; and
a holding member attached to the housing and configured to hold an outer circumference of the piezoelectric element,
wherein the piezoelectric element is held by the holding member so that contact with the housing is prevented.

In addition, in the examples of FIGS 1 to 4, the piezoelectric element 10 is an example of the piezoelectric element, the bone conduction member 20 is an example of the bone conduction member, the holding member 30 is an example of the holding member, and the housing 40 is an example of the housing.

### (Configuration Example 9)

The bone conduction acoustic module according to Configuration Example 8,
wherein a space where the piezoelectric element is provided in the housing has a rectangular shape, and
wherein a plurality of holding members are provided on corners of the rectangular shape.

### (Configuration Example 10)

The bone conduction acoustic module according to Configuration Example 1 or 2,
wherein the holding member and the bone conduction member are both elastically deformable members, and
wherein the holding member has a lower hardness than the bone conduction member.

### (Configuration Example 11)

The bone conduction acoustic module according to any one of Configuration Examples 8 to 10,
wherein the bone conduction member has a first flat surface arranged facing the bone and a second flat surface abutting the piezoelectric element, and
wherein an area surrounded by an outer circumference of the second flat surface is larger than an area surrounded by an outer circumference of the first flat surface.

### (Configuration Example 12)

The bone conduction acoustic module according to Configuration Example 11, wherein the bone conduction member has a tapered portion in which a cross-sectional area surrounded by an outer circumference of the bone conduction member is reduced in a tapered shape from a side closer to the second flat surface of the bone conduction member toward a side closer to the first flat surface of the bone conduction member.

### (Configuration Example 13)

The bone conduction acoustic module according to any one of Configuration Examples 8 to 12, wherein the bone conduction member has an internal space.

### (Configuration Example 14)

A head-mounted acoustic system including a display unit and a frame, the acoustic system including:
the bone conduction acoustic module according to any one of Configuration Examples 8 to 13,
wherein the bone conduction member is fixed to the frame at a position where the vibrations of the piezoelectric element are transmitted to a mastoid projection.

**In** addition, in the example of FIG. 5, the acoustic system 100 is an example of the acoustic system, the display unit 101 is an example of the display unit, and the frame 102 is an example of the frame.

### (Configuration Example 15)

The acoustic system according to Configuration Example 7 or 14, including an equalizer configured so that attenuation of a sound input as an electrical signal to the piezoelectric element is -24 dB or less at a frequency of 10 kHz or higher on a high-frequency side.

### (Configuration Example 16)

The acoustic system according to Configuration Example 7, 14, or 15, including an equalizer configured so that attenuation of a sound input as an electrical signal to the piezoelectric element is -6 dB or more within a frequency range of 2 kHz to 8 kHz.

**In** addition, in the example of FIG. 6, the piezoelectric element 10 is an example of the piezoelectric element, and the equalizer (EQ) 111 is an example of the equalizer.

### [Embodiment Examples]

Hereinafter, embodiment examples of the present disclosure will be described. The present disclosure is not limited to the following embodiment examples.

### (Embodiment Example 1)

As shown in FIGS. 1 and 2, a piezoelectric element having a ceramic piezoelectric body with a long side of 30 mm and a short side of 15 mm was used, and a holding member made of an elastic material was sandwiched between the four corners, and the piezoelectric element was attached and fixed in a housing of a predetermined size in a state in which both sides of the piezoelectric element were vacant. As shown in FIGS. 3 and 4, the end surface parts of the piezoelectric element other than the four corners were made to have a floating structure with respect to the housing. Moreover, a bone conduction member with a diameter of 7.5 mm and a length of 5 mm was provided on the piezoelectric element, and the bone conduction member was made to come into contact with the head when the AR glass type acoustic system was worn as shown in FIG. 5.

### (Comparative Example 1)

Comparative Example 1 is similar to Embodiment Example 1, except that the housing is completely sealed on both sides of the piezoelectric element.

### <Sound leakage measurement>

As shown in FIG. 5, sound leakage was measured when AR glasses were worn. The bone conduction acoustic module was placed at a position where vibrations of the piezoelectric element were transmitted to the mastoid projection behind the left ear. In a side direction, the sound leakage was measured by placing a microphone on the side (left) of the bone conduction acoustic module. **In** a top direction, the sound leakage was measured by placing a microphone above the bone conduction acoustic module. The microphone distance was 5 cm and the output signal was white noise.

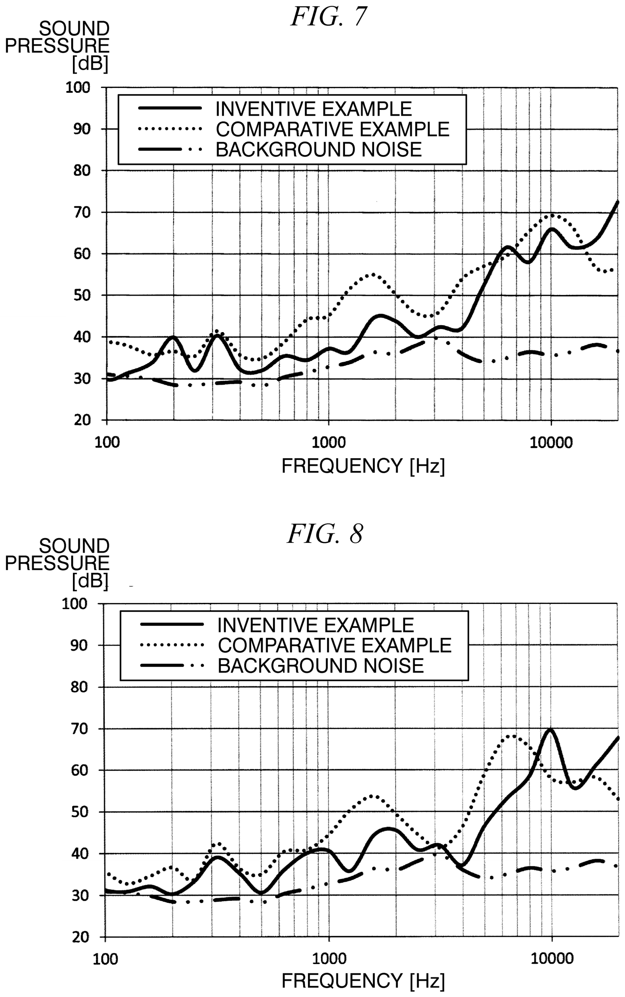

The measurement results are shown in the graphs of FIGS. 7 and 8. The graphs also show measurement results of background noise. In Comparative Example 1, because the housing is sealed on both sides of the piezoelectric element, the cancellation effect due to the opposite phases does not occur. For this reason, in Comparative Example 1, the level in the vicinity of 1 kHz to 2 kHz (1000 Hz to 2000 Hz) is higher than in Embodiment Example 1. The sensitivity of the human ear is highest in this band and this is an important frequency point in terms of sound leakage countermeasures.

### (Embodiment Example 2)

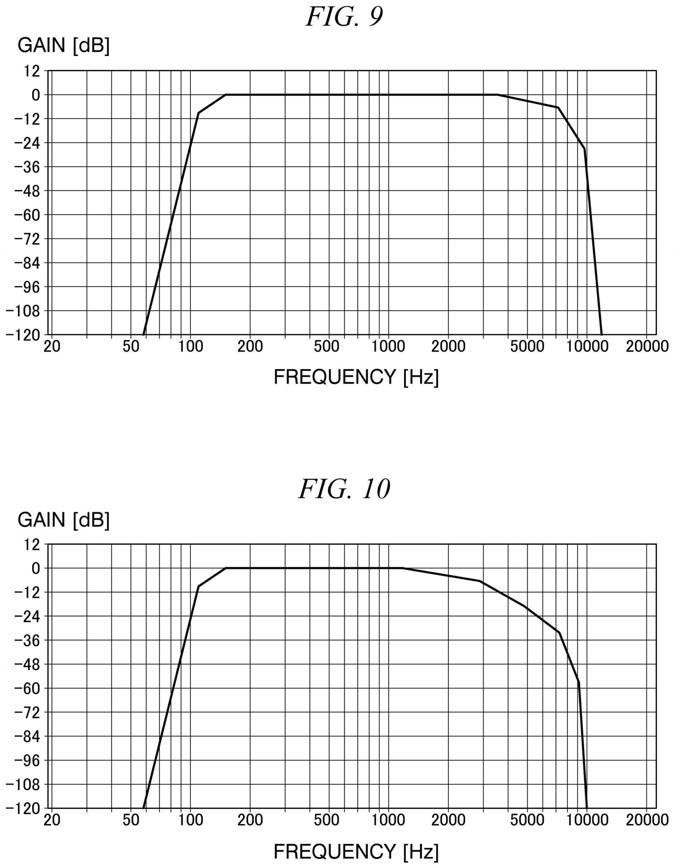

Two examples of characteristics of the equalizer (EQ) are shown in FIGS. 9 and 10. **In** these graphs, the horizontal axis represents frequency (Hz) and the vertical axis represents gain (dB). In these examples, unnecessary low frequencies are cut at about 100 Hz or lower and are cut by an attenuation of -6 dB or less in the high frequency of about 3 kHz or higher or about 7 kHz or higher and a further attenuation of -24 dB or less in the high frequency range of about 10 kHz or higher in consideration of the characteristics of the piezoelectric element.

It is also possible to switch the degree of sound leakage and sound quality, priority, and the like by changing the cutoff characteristics in the high frequency range. The filter is processed by a digital signal processing (DSP) function built into a system-on-chip (SoC) type processing system. Moreover, it is preferable to perform a drive process mainly at low frequencies with an amplifier capable of outputting a high voltage instead of an electric current output amplifier so that the amplifier is driven sufficiently. Thereby, it is possible to reduce sound leakage to the surroundings while achieving suitable bone conduction even in a piezoelectric element having high impedance at high frequencies.

### REFERENCE SIGNS LIST

10 Piezoelectric element
11 First flat surface of piezoelectric element
12 Second flat surface of piezoelectric element
13 Outer circumference of piezoelectric element
14 Corner of piezoelectric element
20 Bone conduction member
21 First flat surface of bone conduction member
22 Second flat surface of bone conduction member
23 Tapered portion of bone conduction member
24 Outer circumference of bone conduction member
25 Space of bone conduction member
30 Holding member
31 Piezoelectric element holding portion
32 Housing fixing portion
40 Housing
41 First vacant portion
42 Second vacant portion
43 First frame portion
44 Second frame portion
45 Side wall portion of housing
46 Mounting portion
47 Mounting hole
48 Space of housing
49 Corner of housing
50 Bone conduction acoustic module
100 Acoustic system
101 Display unit
102 Frame
103 Conduction portion
104 Cord
111 Equalizer (EQ)
112 Amplifier (AMP)
200 Head
201 Eye
202 Nose
203 Ear

## Claims

1. A bone conduction acoustic module comprising:
a piezoelectric element;
a bone conduction member configured to abut the piezoelectric element and transmit vibrations of the piezoelectric element to a bone; and
a support member configured to directly or indirectly support the piezoelectric element and the bone conduction member,
wherein the piezoelectric element includes a first flat surface abutting the bone conduction member and a second flat surface located opposite to the first flat surface, and
wherein the support member includes a first vacant portion where the support member is vacant on the first flat surface side and a second vacant portion where the support member is vacant on the second flat surface side.

2. The bone conduction acoustic module according to claim 1,
wherein the support member is a housing including a holding member, and
wherein the piezoelectric element is provided within the housing so that contact with the housing is prevented by the holding member.

3. The bone conduction acoustic module according to claim 2,
wherein the holding member and the bone conduction member are both elastically deformable members, and
wherein the holding member has a lower hardness than the bone conduction member.

4. The bone conduction acoustic module according to any one of claims 1 to 3,
wherein the bone conduction member has a first flat surface arranged facing the bone and a second flat surface abutting the piezoelectric element, and
wherein an area surrounded by an outer circumference of the second flat surface of the bone conduction member is larger than an area surrounded by an outer circumference of the first flat surface of the bone conduction member.

5. The bone conduction acoustic module according to claim 4, wherein the bone conduction member has a tapered portion in which a cross-sectional area surrounded by an outer circumference of the bone conduction member is reduced in a tapered shape from a side closer to the second flat surface of the bone conduction member toward a side closer to the first flat surface of the bone conduction member.

6. The bone conduction acoustic module according to any one of claims 1 to 3, wherein the bone conduction member has an internal space.

7. A head-mounted acoustic system including a display unit and a frame, the acoustic system comprising:
the bone conduction acoustic module according to any one of claims 1 to 3,
wherein the bone conduction member is fixed to the frame at a position where the vibrations of the piezoelectric element are transmitted to a mastoid projection.

8. The acoustic system according to claim 7, comprising an equalizer configured so that attenuation of a sound input as an electrical signal to the piezoelectric element is -24 dB or less at a frequency of 10 kHz or higher on a high-frequency side.

9. The acoustic system according to claim 7, comprising an equalizer configured so that attenuation of a sound input as an electrical signal to the piezoelectric element is -6 dB or more within a frequency range of 2 kHz to 8 kHz.
